# EUROPEAN PATENT APPLICATION

(11) **EP 0 846 635 A1**
(43) Date of publication of application: **10.06.1998**
(21) Application number: 97830645.4
(22) Date of filing: 04.12.1997
(51) Int. Cl.: B65G 1/00, B65G 33/02

(54) **Flexible threaded bar used as hauling element in the curved sections of overhead conveyors.**

(30) Priority: 06.12.1996 IT MC960131
(71) Applicant: METALPROGETTI di Santicchi Augusto & C. - S.n.c., I-06100 Perugia (IT)
(72) Inventor: Santicchi, Augusto, Frazione San Sisto-Perugia (PG) (IT)
(74) Representative: Baldi, Claudio

(57) **Abstract**

This invention concerns a threaded bar which acts as hauling element in the curved sections of overhead conveyors characterised by an axial through hole (2) and a slot (3) which cuts through the helicoidal thread (1) with several breaks (3a) and continues into said axial hole.

## Description

This patent application concerns a flexible threaded bar used on overhead conveyors as a hauling element in the curved sections of the line.

Helicoidal threaded bars in overhead conveyors have been used for years.

Thanks to the fact that the bars are threaded when they are rotated about their longitudinal axis they feed the hooks on which the items transported hang, forward.

As soon as these hooks are in fact loaded on to one of these threaded bars, they spontaneously tend to drop and rest on the bottom of the undercut between two consecutive turns of the threading; the rotation of the bar then causes the forward feed of said hooks which are driven by the axial force which the threading discharges onto the same continuously as it screws.

Said bars have up to now been used mainly as rectilinear connection and union elements between overhead conveyor systems using different hauling means.

In other words the threaded bars have to date only had the function of transporting items along straight sections while the items were hauled through the curved sections of the conveyor line by means structurally able to move through curved sections such as steel cables, slotted metal belts or chains, suitably joined with said rectilinear threaded bars.

In this sense it is true to say that closed circuit overhead conveyor systems using exclusively threaded bars have never to date been constructed.

The reasons that said threaded bars are not used for the realisation of a closed circuit system is due to the structural rigidity of the bars themselves which prevents the same from bending elastically in order to move through curved sections and maintain the same during the screwing stage.

It is evident that curved helicoidal bars can not be used in the curved sections of conveyor systems unless they are flexible in that on the contrary they would not be able to rotate about their own longitudinal axis.

The application of a torque to a non flexible curved bar would in fact produce the rotation of the entire bar around the axis of the torque and not around the longitudinal axis of the bar itself.

It follows that in order to make the curved bar rotate around its longitudinal axis it is necessary for the bar to undergo a continuous elastic and alternating rotation since its fibres at each rotation must extend and shorten cyclically passing from the convex side to the concave side of the curvature of the bar.

The inventive idea is to realise a helicoidal threaded bar which can be used as a hauling means even along curved sections of an overhead conveyor line.

Two solutions were adopted to produce a threaded bar with these characteristics: the first was the decision to give the bar a tubular structure and the other was to cut the bar with a discontinuous through slot realised at the head of the thread.

More precisely it should be noted that the slot crosses through thread of the bar and continues into the internal channel of the same; moreover the slot can not be continuous but must have breaks at least in the two end sections of the bar thread.

It is evident that if this threading were continuous, namely without any breaks whatsoever, the threaded bar would loose its structural integrity, dividing itself into two separate parts consisting of two helicoidal profiles.

In particular the combination of the above solutions - namely use of a tubular structure for the bar and realisation of the slot along the entire threading - makes the bar according to the invention extremely flexible and thus able to rotate around its longitudinal axis while maintaining the axis of curvature imposed on the same by the supports which hold it in position in the conveyor plant.

The great operational characteristic of the bar according to the invention is that not only it is extremely flexible but also self-supporting making it possible to install the same in the curved sections of a conveyor system by means of only two supports positioned at its ends.

This self-supporting capacity allows the bar according to the invention to cover curved sections, including quite long sections, thereby adapting to the requirements of the line of an overhead conveyor plant.

It is evident that thanks to the threaded bar according to the invention it is now possible to realise the entire overhead conveyor plant (complete with straight and curved sections) using as conveyor means exclusively the helicoidal threaded bars; more precisely conventional threaded bars for the straight sections and the threaded bars according to the invention for the curved sections.

The use of the threaded bars according to the invention is also extremely useful even as connection elements between two conventional overhead conveyor plants, and not for an entire plant.

The reason for this is that while threaded bars could to date be used as connection elements only for the straight sections now with the solution according to the invention they can finally be used as connection elements which can move through curved sections.

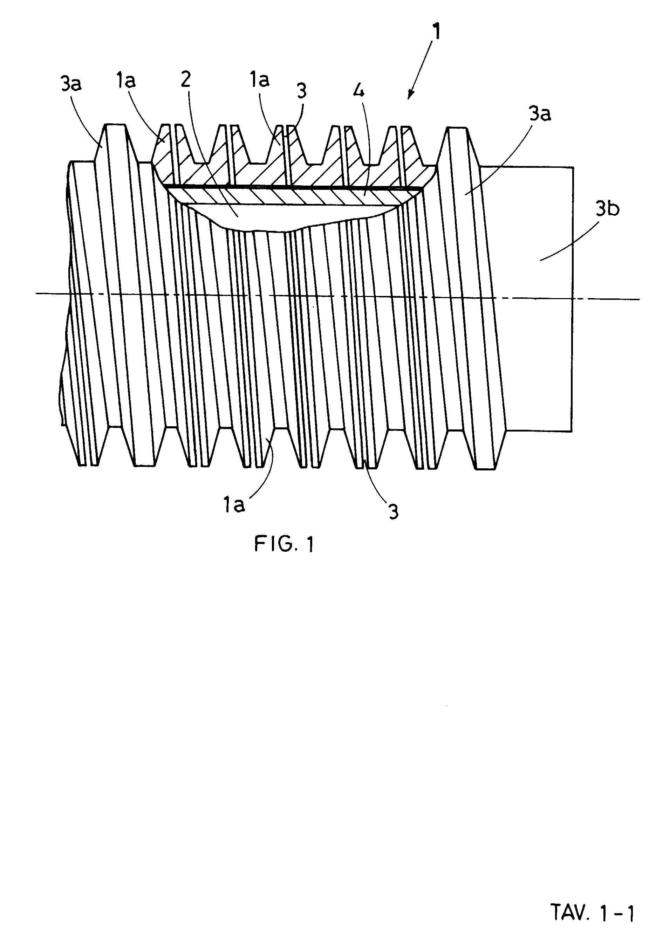

For major clarity the description of the invention continues with reference to the enclosed drawing intended only for purposes of illustration and not in a limiting sense whereby figure 1 shows the end section of the bar according to the invention in part cross-sectioned on an axial plane.

With reference to this drawing, the threaded bar (1) ) according to the invention has an axial through hole (2) substantially making the same a tubular structure.

The helicoidal thread (1a) of said bar (1) is cut along its full length by a centre slot (3) which crosses it completely continuing into the axial through hole (2).

As mentioned above, said slot (3) is not continuous but has breaks (3a) to prevent loss of structural integrity of the bar (1).

The number (3b) refers to the end bar hold used for the connection of the threaded bar (1) with another adjacent threaded bar.

Finally it should be noted that if the bar (1) according to the invention is subject to considerable torsional stress it might structurally deform and cause the internal cross-section to shrink; in order to prevent this problem a core (4) is fitted in the axial hole (2) of the bar (1) ) which prevents shrinkage of the internal cross-section.

Obviously this core (4) must ensure the structural stability of the bar (1) according to the invention without reducing the flexibility of the same; for this purpose it may consist of a rubber tube (as shown in the embodiment illustrated in drawing 1 ) or by a steel cable.

## Claims

1. A flexible threaded bar used as a hauling element in the curved sections of overhead conveyor plants, characterised by an axial through hole (2) and a helicoidal thread (1) cut along its entire length by a centre slot (3) which crosses it completely and continues into the above axial through hole (2) which has several breaks (3a).

2. A flexible threaded bar used as a hauling element in the curved sections of overhead conveyor plants according to claim 1 characterised by the precise housing of a flexible core in its axial through hole (2).
